# EUROPEAN PATENT SPECIFICATION

(11) **EP 4 064 905 B1**
(45) Date of publication and mention of the grant of the patent: **03.01.2024**
(21) Application number: 20811651.7
(22) Date of filing: 27.11.2020
(51) Int. Cl.: A24F 40/42

(54) **METHOD OF PRODUCING A BIODEGRADABLE CARTRIDGE FOR TOBACCO VAPOUR SYSTEM**
VERFAHREN ZUR HERSTELLUNG EINER BIOLOGISCH ABBAUBAREN KAPSEL FÜR EIN TABAK-DAMPF-SYSTEM
PROCÉDÉ POUR LA PRODUCTION D'UNE CARTOUCHE BIODÉGRADABLE POUR UN SYSTÈME DE VAPEUR POUR TABAC

(30) Priority: 28.11.2019 EP 19212237
(43) Date of publication of application: 05.10.2022
(73) Proprietor: JT International S.A., 1202 Genève (CH)
(72) Inventor: SCHÄFER, Sebastian, 54558 Gillenfeld (DE); DÄNNER, Johannes, 54338 Schweich (DE); JOHAENTGES, Thomas, 54338 Schweich (DE)
(74) Representative: BOVARD AG
(86) International application number: PCT/EP2020/083722
(87) International publication number: WO 2021/105421

(56) References cited:
- EP-A2- 0 777 977
- GB-A- 2 026 842
- US-A1- 2010 024 834
- US-A1- 2019 082 735

## Description

### Technical field of the invention

The present invention relates to the field of tobacco, especially to tobacco vapour. More specifically, the invention relates to a method for producing a biodegradable cartridge for tobacco vapour delivering electronic devices and a biodegradable cartridge obtained accordingly.

### Background of the invention

Different kinds of vaping and smoking devices exist currently on the market. Over the recent years, vaping devices such as e-cigarettes and tobacco-vapour generating devices, among which heat-not-burn (HNB) systems are most common, have had a lot of traction and their market share have been increasing significantly.

Electronic cigarettes, or e-cigarettes, are also called vapes, e-hookahs, vape pens, tank systems, mods, and electronic nicotine delivery systems (ENDS). E-cigarettes work by heating a substance such as a liquid to produce an aerosol that users inhale as opposed to HNB, wherein a tobacco containing substrate is heated directly or indirectly or infused with a neutral aerosol produced from to generate an inhalable aerosol.

This growing market will inevitably lead to millions of devices which will be disposed of improperly. Even more so, the accompanied disposable and single use waste such as capsules and containers which are used to contain the vaping material will potentially create massive recycling disaster.

It would therefore be advantageous to provide consumers with an alternative where the consumables or the disposable single use products have a reduced impact to the environment while maintaining the quality and characteristics of the aerosol generating products consumed therewith. It would also be advantageous to allow the users have a higher degree of freedom to provide themselves with smoking substance of their choice.

US 2010/024834 A1 discloses a disposable container of tobacco for use in conjunction with a vaporising device. The container 90 comprises a cylindrical side wall 91 of paper, similar to that used in rolling a cigarette. The side wall 91 defines a hollow interior region 92 for the tobacco 2, and an upstream cap 93 extends across an upstream opening 94 and is sealed to the side wall 91. The upstream cap 93 is of a first permeable material, in this case porous paper.

### Summary of the invention

The inventors of the present invention have found solutions to the above-discussed problems through the present invention as defined in the claims.

A first aspect of the invention relates to a method of producing a biodegradable cartridge for tobacco vapour system, wherein the biodegradable cartridge has cylindrical defining an inner cavity, comprising the steps of
- Providing a first element of cylindrical shape defining said cavity of the cartridge;
- Providing a second element to a first end of the first element, thereby closing a first end of the cavity of the cartridge;
- Providing another second element to a second end of the first element, thereby closing the second end of the cavity of the cartridge, wherein the two second elements are identical;
- Providing a third element about one of the first and second elements such that the periphery or circumference of the cartridge is larger at the first end of the cartridge than the periphery or circumference at a second end of the cartridge;

wherein the first element, the second element and the third element are made of biodegradable materials,
wherein the cartridge is designed in such a way that an air flow is capable of flowing from the first end to the second end of the elongated cylindrical shape cartridge, and/or vice versa.

A second aspect of the invention relates to a biodegradable cartridge for tobacco vapour system, wherein the cartridge has a predominantly elongated cylindrical shape having a cavity, comprising a wall, a first end and a second end, wherein the wall is made of a first element, wherein two identical second elements are provided each to the each end of the elongated cartridge, a third element is provided to the second end of the elongated cartridge such that the periphery of the second end is larger than the periphery of the first end of the elongated cartridge, wherein the first element, the second element and the third element are made of biodegradable materials, wherein the cartridge is designed in such a way that an air flow is capable of flowing from the first end to the second end of the elongated cylindrical shape cartridge, and/or vice versa.

The inventors of the present invention have found a method of producing a cartridge for tobacco vapour system allows the cartridge to be produced in a more ecological and environmentally friendly manner, wherein all the materials are made with biodegradable material. Moreover, the method of production allows an easy and straight-forward manufacturing process. A lower production cost can thereby be achieved.

It is also disclosed herein that the biodegradable cartridge and its manufacturing method disclosed herein enables users to "custom-made" the cartridges for tobacco vapour, wherein the ingredients for vapour can be selected and mixed according to their favourite and taste.

Moreover, the biodegradable cartridge itself can also be "custom-made" in such a way that each of the cartridges can be fitted differently i.e. more tightly or loosely to the e-vapour device, or provide one or more elements having more air channels or different porosities, according to the preference of the users, such that a stronger vapour or a milder vapour (as vapour is blended with more air) can be produced.

According to some embodiments, the method comprising a further step of filling the cavity of the cartridge with one or more filling materials, preferably tobacco-containing granules, liquids, tobacco foams, gels or semi-solid matrix.

According to some embodiments, the filling of the filling material is performed after the first end of the cavity of the cartridge is provided with the second element. This allows the filling material to be filled up while one end being closed or sealed by the second element.

According to some embodiments, the third element is provided in form of a sheet to wrap around the second end of the elongated cartridge, preferably the portion being wrapped has an additional thickness of about 1 mm to about 10 mm, more preferably about 2 mm to 5 mm.

According to some embodiments, the third element is provided in form of a cap to encase the second end of the elongated cartridge. The cap is preferably a cylindrical cap having both open ends. Alternatively, both ends of the cap may have mesh or net such that air is capable of flowing freely from one end to another end.

According to some embodiments, the second element is provided to the third element before being placed to the cavity of the second end of the elongated cartridge, wherein the third element is provided in form of a cap to encase the second end of the elongated cartridge. The cap is preferably a cylindrical cap having both open ends. Alternatively, both ends of the cap may have mesh or net such that air is capable of flowing freely from one end to another end.

According to some embodiments, the cap provided to the second end of the elongated cartridge has a periphery larger than the periphery of the elongated cylindrical cartridge. This additional periphery of the cap may be served as an abutment point when the first element is being inserted into a smoking device e.g. a vapour device. In other words, when the biodegradable cartridge is inserted into a vaping device, the third element e.g. cap, due to its periphery is larger than the mouth of the vaping device, will not be accommodated within the vaping device.

According to some preferred embodiments, the first element is formed by rolling of a sheet material, such as card or paper, about a longitudinal axis.

According to some preferred embodiments, the first element (10) and one of the second element (20a, 20b) are attached to each other in an end-to-end abutment with wrapper, preferably a paper wrapper.

According to some embodiments, the periphery of the cap is about 5 % to 40 %, preferably about 10 % to 30 % more than the periphery of the first end of the elongated cylindrical cartridge. This additional periphery of the cap or the third element allows part of the cartridge to stay outside of the device.

According to some embodiments, further comprising of a sealing step and/or a joining step. This embodiment is particularly useful when the filling material is a liquid such that the filling material can be safely contained within the cartridge.

According to some embodiments, one or more filling materials, preferably tobacco-containing granules, gel, liquid, foam, mousse or semi-solid matrix are provided into the cavity of the elongated cylindrical cartridge.

According to some embodiments, the biodegradable materials is paper, cotton, natural fibres, and/or recycled biomaterials.

By "about" or "approximately" in relation to a given numerical value, it is meant to include numerical values within 10% of the specified value. All values given in the present disclosure are to be understood to be complemented by the word "about", unless it is clear to the contrary from the context.

The indefinite article "a" or "an" does not exclude a plurality, thus should be treated broadly.

Unless defined otherwise, technical and scientific terms used herein have the same meaning as commonly understood by one of ordinary skill in the art to which this invention belongs.

The term "element" as used herein e.g. "first element", "second element" and "third element" referred to element which is made up of one or several parts e.g. mechanical parts. In other words, the element can be a part that combines with other parts to be functioned or to form something bigger, or to render a specific function when work together with other components.

As used herein, the terms "cartridge" or "container" referred to a hollow object, in form of such as a box, a rod or a housing which can be used for housing one or more elements therein, especially for carrying or storing. The material forming the cartridge/ container may be similar or different to the material which is contained within the container.

As used herein, the term "filling material" referred to substance e.g. biological substance that is composed of one or more materials. In other words, it refers to one or more ingredients which made up of a composition.

As used herein, the term "aerosol-generating material" refers to a material, upon heating, capable of releasing volatile compounds, which can form an aerosol. The aerosol generated from aerosol-generating material of aerosol-generating articles described herein may be visible or invisible and may include vapours (for example, fine particles of substances, which are in a gaseous state, that are ordinarily liquid or solid at room temperature) as well as gases and liquid droplets of condensed vapours.

Throughout the forthcoming description of the invention, the term "tobacco" refers to any part of a tobacco plant or mixtures of tobacco plants arising from the same or different species as well as being genetically modified (GMO). The tobacco plant belongs to the family *Solanaceae* and the genus *Nicotiana.* Examples of parts are leaves, stems, roots etc., which may be obtained by any method such as being fresh, frozen, deep-frozen, freeze dried or cured.

### Brief description of the drawings

Figure 1 shows schematic representation of a biodegradable cartridge according to the present invention when in used with an aerosol-generating device.
Figures 2A to 2E show a schematic representation of a manufacturing method of a biodegradable cartridge according to a first embodiment of the present invention.
Figure 3A to 3D show a schematic representation of a manufacturing method of a biodegradable cartridge according to a second embodiment of the present invention.
Figure 4A to 4D show a schematic representation of a manufacturing method of a biodegradable cartridge according to a third embodiment of the present invention.

### Detailed description of the invention

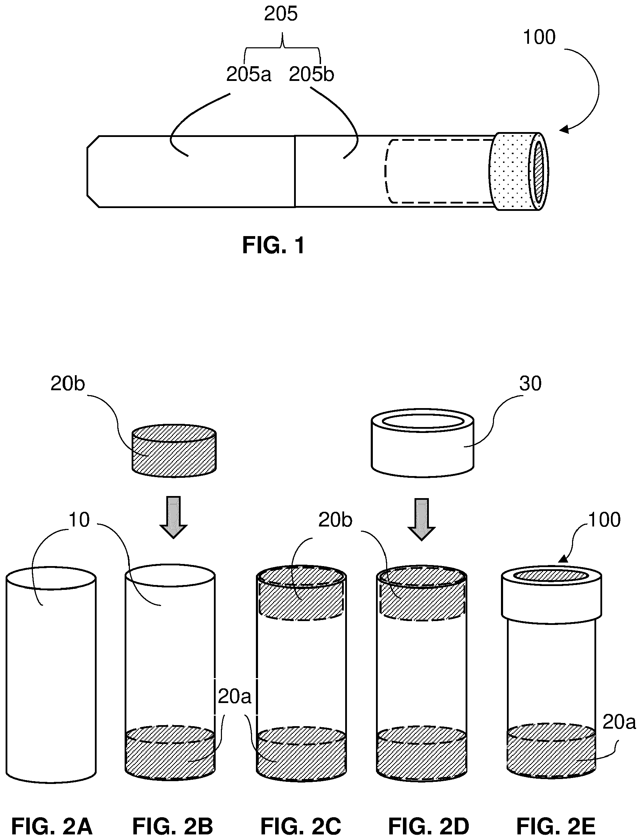

Figures 1 shows an example of the biodegradable cartridge 100 of the present invention when in use with a vaping device 205. The vaping device 205 may be made up of one or more components, such as an electrical power component 205a comprising at least a battery and a mouthpiece component 205b electrically connectable to the power component 205a and comprising an aerosol generating material reservoir containing for example a vaporisable liquid which can be heated by resistive or inductive heating to form an aerosol upon activation of the device by a user drawing air through the free end of the mouthpiece component 205b, where a cartridge 100 is inserted as shown. The cartridge where its one far end having a smaller diameter (or a smaller periphery) than another far end can be inserted into one far end of the vaping device 205.

The biodegradable cartridge 100 of the present invention can be manufactured according to several methods. Figures 2A-2E demonstrate a first manufacturing process, whereby a first, tubular, element 10 is formed from rolling a sheet, for instance a paper or board sheet, into a cylindrical shape, either by rolling or spiralling of said sheet. A second element 20a, forming an end plug for the tubular first element 10, having a diameter slightly smaller than the diameter of the tubular first element 10 is then provided to a first end of the tubular first element 10 to close said first end (Figure 2B). Said second element 20a may be secured to the inner walls of the tubular first element 10, for instance using a binder, a glue or through heat-melt.

Filling material such as tobacco-containing material as well as aerosol-generating substrates and materials can be provided within the cavity of the elongated tubular first element 10 before a second end thereof is being closed. According to the first embodiment of the present invention as shown in Fig. 2A-2E, a second end plug 20b is provided to the said second end of the tubular first element 10 after it has been filed with a charge of filling material, thereby closing the second opening. As for the first end, the second end plug 20b may be attached to the inner wall of the tubular first element 10 for instance using a binder, a glue or through heat-melt. Alternatively, or complementarily, a third element 30, such as represented a ring component, can be provided about the second end of the tubular first element 10 to further secure the second element 20b (Fig. 2D) about the second end of the tubular first element 10. A similar third element 30 may also be provided to the first end of the tubular element 10 to further secure second-element 20a. The third element 30 is in form of a ring, wherein the ring has an inner diameter substantially equal, or even slightly smaller than the outer diameter of the end plugs 20a, 20b and tubular element 10, and exhibiting an outer diameter (or a periphery) larger than the outer diameter of the tubular element 10. By providing the ring element 30 to one end of the cartridge (or container), said cartridge 100 thus has one end having larger diameter (or periphery) than another end without the ring 30 being attached thereon. This larger diameter of the cartridge 100 serves to abut the cartridge with the end of the vaping device 205 such that the cartridge will not be fully inserted into the vaping device 205, as visible in fig. 1.

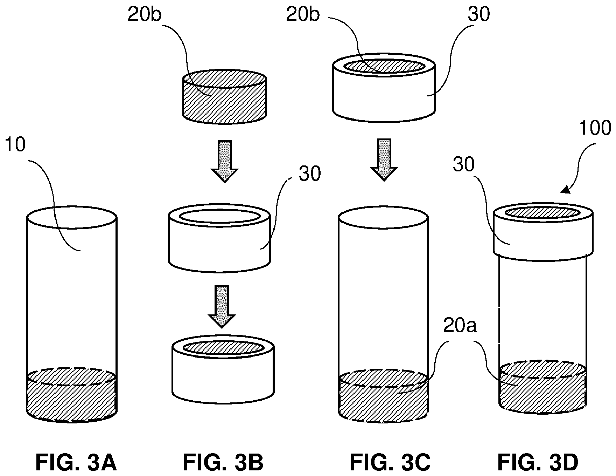

According to a second embodiment of the present invention (Figures 3A-3D), the manufacturing process is largely similar to the first embodiment as described above, except that the second plug 20b is firstly provided to the ring 30 (Figure 3B) to form a cap member, which is then slid about the tubular element 10 at an open end of the elongated cylindrical shape cartridge. Similar to the first embodiment, the ring 30 is provided to circumscribe the opening of the top open end of the elongated cylindrical shape cartridge while the plug element 20b fitted into said ring covers said opening to prevent the filling material from spilling out therefrom. The plug element 20b may preferably be of a shorter longitudinal dimension than that of the ring 30 when measured along a longitudinal axis parallel to a longitudinal axis of the cartridge, i.e. parallel to a chord of the tubular element 10 of the cartridge 100. Thus, the cap member formed of the said plug second element 20b in the ring third element 30 may be actually slid and capped onto the open end of the tubular element 10 easily.

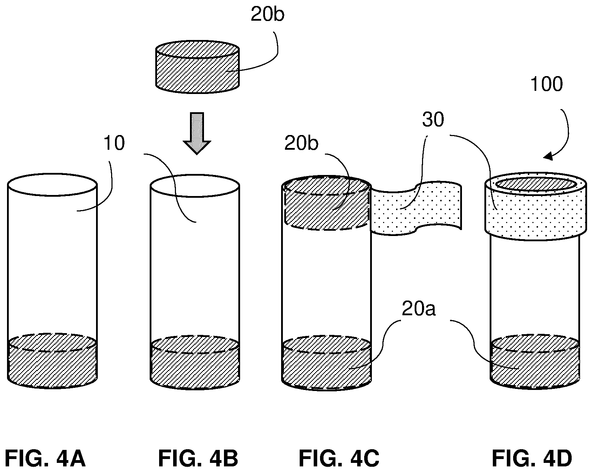

In a third embodiment (Figures 4A-4D), the manufacturing process differs to the first embodiment and the second embodiment in that the third element 30 can be provided in form of a sheet roll instead of a ring. Once the filling material 50 is filled within the cavity of the elongated cylindrical shape cartridge and that both ends of the cylindrical cartridge are being closed or sealed by the two plug second elements 20a, 20b, the third element 30 can then be wrapped around one of the second elements 20a, 20b such that the diameter of that end of the tubular element 10 can be enlarged.

To this end, it is disclosed that the first element 10, second element 20a, 20b and the third element 30 are biodegradable and that they can be provided with similar material. Of course, different kind of materials or a mixed of a several materials in an element have been contemplated. The biodegradable materials can be for instance paper, natural fibre, cotton, recycled biomaterials.

The two second elements 20a, 20b can be provided with the same material or can be made up of different materials. The second element 20a, 20b is preferably made of a material that is air permeable or has a structure that is air permeable. For instance, the material can be porous and has a sponge-like microstructure, or it can be provided with plurality of air channels to allow for an airflow. Alternatively, the second element 20a, 20b can be provided with a micromesh or micro-net such that air is capable of flowing within the body of the elements. In some embodiments, the second element 20a, 20b can be provided using for instance a filter plug of a cigarette which is made of biodegradable materials.

In any of the first, second or third embodiments previously described the first element 10 and first second element 20a may alternatively by adjoined and attached to each other in an end-to-end abutment with a wrapper, in particular a paper wrapper know as a plugwrap in the smoking article making industry to attach together multiple filter segments for instance. Such alternative attachment method for the first element 10 and first second element 20a provides the advantage to allow for simultaneous formation of multiple tubular bodies for the cartridges by attachment end to end of a plurality of tubular rods to form first elements 10 and rods of filter material of at least twice the length of a second elements 20a, 20b in alternance, and to wrap them altogether with a single plugwrap. The attached rod thus formed can then be cut, by laser or sawing for example, in the middle of the filter rods in order to cut individual cartridge bodies comprised of one first element 10 and one second element 20a attached to each other with plugwrap and then directly fillable with filling material according to various processes previously described.

It is also disclosed herein that the biodegradable cartridge 100 of the present invention can also be provided with one or more additional segments. For instance, a segment which is made up of a plurality of elongated rods, each rod having cavity within, are provided to the elongated cylindrical shape cartridge 100 (e.g. in between the two second elements 20a, 20b). This segment may serve to facilitate an air flow or may serve as an air-cooling section.

## Claims

1. A method of producing a biodegradable cartridge (100) for tobacco vapour system, wherein the biodegradable cartridge (100) has cylindrical shape defining an inner cavity, comprising the steps of
▪ Providing a first element (10) of cylindrical shape defining said cavity of the cartridge;
▪ Providing a second element (20a, 20b) to a first end of the first element (10), thereby closing a first end of the cavity of the cartridge (100);
▪ Providing another second element (20a, 20b) to a second end of the first element (100), thereby closing the second end of the cavity of cartridge (100), wherein the two second elements are identical;
▪ Providing a third element (30) about one of the first or second elements (20a, 20b) such that the periphery of the cartridge is larger at a first end of the cartridge than the periphery at a second end of the cartridge (100);
wherein the first element (10), the second element (20a, 20b) and the third element (30) are made of biodegradable materials,
wherein the cartridge (100) is designed in such a way that an air flow is capable of flowing from the first end to the second end of the elongated cylindrical shape cartridge (100), and/or vice versa.

2. The method according to claim 1, comprising a further step of filling the cavity of the cartridge (100) with one or more filling materials, preferably tobacco-containing granules.

3. The method according to claim 2, wherein the filling of the filling material is performed after the first end of the cavity of the cartridge (100) is provided with the second element (20a, 20b).

4. The method according to any one of claim 1 to claim 3, wherein the third element (30) is provided in form of a sheet to wrap around the second end of the elongated cartridge (100), preferably the portion being wrapped has an additional thickness of about 1 mm to about 10 mm, more preferably about 2 mm to 5 mm.

5. The method according to any one of claim 1 to claim 3, wherein the third element (30) is provided in form of a cap to encase the second end of the elongated cartridge (100).

6. The method according to any one of claim 1 to claim 3, wherein the second element (20b) is provided to the third element (30) before being placed to the cavity of the second end of the first element (10), wherein the third element (30) is provided in form of a cap to encase the second end of the elongated cartridge (100).

7. The method according to claim 5 or claim 6, wherein the cap provided to the second end of the elongated cartridge has a periphery larger than the periphery of the elongated cylindrical cartridge (100).

8. The method according to claim 7, wherein the periphery of the cap is about 5 % to 40 %, preferably about 10 % to 30 % more than the periphery of the first end of the elongated cylindrical cartridge (100).

9. The method according to any one of the preceding claims, further comprising of a sealing step and/or a joining step.

10. The method according to any one of the preceding claims, wherein the first element is formed by rolling of a sheet material, such as card or paper, about a longitudinal axis.

11. The method according to any one of the preceding claim, wherein the first element (10) and one of the second element (20a, 20b) are attached to each other in an end-to-end abutment with wrapper, preferably a paper wrapper.

12. A biodegradable cartridge (100) for tobacco vapour system, wherein the cartridge (100) has a predominantly elongated cylindrical shape having a cavity, comprising a wall, a first end and a second end, wherein the wall is made of a first element (10), wherein two identical second elements (20a, 20b) are provided each to the each end of the elongated cartridge (100), a third element (30) is provided to the second end of the elongated cartridge (100) such that the periphery of the second end is larger than the periphery of the first end of the elongated cartridge (100), wherein the first element (10), the second element (20a, 20b) and the third element (30) are made of biodegradable materials, wherein the cartridge (100) is designed in such a way that an air flow is capable of flowing from the first end to the second end of the elongated cylindrical shape cartridge (100), and/or vice versa.

13. The biodegradable cartridge (100) according to claim 12, wherein the biodegradable materials is paper, cotton, natural fibres and/or recycled biomaterials.

14. The biodegradable cartridge (100) according to any one of the claims 12-13, wherein the periphery of the second end is about 5 % to 40 %, preferably about 10 % to 30 % larger than the periphery of the first end of the elongated cylindrical cartridge (100), after the third element (30) being provided to the second end of the elongated cartridge (100).

## Patentansprüche

1. Verfahren zur Herstellung einer biologisch abbaubaren Kartusche (100) für ein Tabakdampfsystem, wobei die biologisch abbaubare Kartusche (100) eine zylindrische Form hat, die einen inneren Hohlraum definiert, umfassend die Schritte:
▪ Bereitstellen eines ersten Elements (10) von zylindrischer Form, welches den Hohlraum der Kartusche definiert;
▪ Bereitstellen eines zweiten Elements (20a, 20b) an einem ersten Ende des ersten Elements (10), wodurch das erste Ende des Hohlraums der Kartusche (100) verschlossen wird;
▪ Bereitstellen eines anderen zweiten Elements (20a, 20b) an einem zweiten Ende des ersten Elements (100), wodurch das zweite Ende des Hohlraums der Kartusche (100) verschlossen wird, wobei die beiden zweiten Elemente identisch sind;
▪ Bereitstellen eines dritten Elements (30) an einem der ersten oder zweiten Elemente (20a, 20b) so dass der Umfang der Kartusche am ersten Ende der Kartusche grösser ist als der Umfang an dem zweiten Ende der Kartusche (100);
wobei das erste Element (10), das zweite Element (20a, 20b) und das dritte Element (30) aus biologisch abbaubaren Materialien gefertigt sind;
wobei die Kartusche (100) derart gestaltet ist, dass ein Luftstrom von dem ersten Ende zu dem zweiten Ende der länglichen zylindrischen Kartusche (100) und/oder umgekehrt strömen kann.

2. Verfahren nach Anspruch 1, umfassend einen weiteren Schritt zum Füllen des Hohlraums der Kartusche (100) mit einem oder mehreren Füllmaterialien, vorzugsweise mit tabakhaltigem Granulaten.

3. Verfahren nach Anspruch 2, wobei das Füllen des Füllmaterials durchgeführt wird, nachdem das erste Ende des Hohlraums der Kartusche (100) mit dem zweiten Element (20a, 20b) versehen ist.

4. Verfahren nach einem der Ansprüche 1 bis 3, wobei das dritte Element (30) in Form eines um das zweite Ende der länglichen Kartusche (100) wickelbaren Blatts vorgesehen ist, wobei der umwickelte Abschnitt eine zusätzliche Dicke von etwa 1 mm bis etwa 10 mm, bevorzugter von 2 mm bis 5 mm aufweist.

5. Verfahren nach einem der Ansprüche 1 bis 3, wobei das dritte Element (30) in Form einer Kappe vorgesehen ist, um das zweite Ende der länglichen Kartusche (100) zu umhüllen.

6. Verfahren nach einem der Ansprüche 1 bis 3, wobei das zweite Element (20b) an dem dritte Element (30) angeordnet wird, bevor es an dem Hohlraum am zweiten Ende des ersten Elements (10) platziert wird, wobei das dritte Element (30) in Form einer Kappe zum Umhüllen des zweiten Endes der länglichen Kartusche (100) vorgesehen ist.

7. Verfahren nach Anspruch 5 oder Anspruch 6, wobei die an dem zweiten Ende der länglichen Kartusche vorgesehene Kappe einen grösseren Umfang als der Umfang der länglichen zylindrischen Kartusche (100) aufweist.

8. Verfahren nach Anspruch 7, wobei der Umfang der Kappe um etwa 5 % bis 40 %, vorzugsweise etwa 10 % bis 30 % grösser als der Umfang des ersten Endes der länglichen zylindrischen Kartusche (100) ist.

9. Verfahren nach einem der vorhergehenden Ansprüche, wobei weiter ein Versiegelungsschritt und/oder ein Verbindungsschritt umfasst ist.

10. Verfahren nach einem der vorhergehenden Ansprüche, wobei das erste Element durch Rollen eines Blattmaterials, wie eine Karte oder ein Papier, um eine longitudinale Achse gebildet wird.

11. Verfahren nach einem der vorhergehenden Ansprüche, wobei das erste Element (10) und eines der zweiten Elemente (20a, 20b) aneinander mit den Enden anstossend mit einer Umhüllung, vorzugsweise einer Papierumhüllung, befestigt werden.

12. Biologisch abbaubare Kartusche (100) für ein Tabakdampfsystem, wobei die Kartusche (100) eine überwiegend längliche zylindrische Form mit einem Hohlraum aufweist, der eine Wand, ein erstes Ende und ein zweites Ende umfasst, wobei die Wand aus einem ersten Element (10) gefertigt ist, wobei zwei identische zweite Elemente (20a, 20b) jeweils an jedem Ende der länglichen Kartusche (100) vorgesehen sind, und ein drittes Element (30) an dem zweiten Ende der länglichen Kartusche (100) vorgesehen ist, so dass der Umfang des zweiten Endes grösser ist als der Umfang des ersten Endes der länglichen Kartusche (100), wobei das erste Element (10), das zweite Element (20a, 20b) und das dritte Element (30) aus biologisch abbaubaren Materialien gefertigt sind, und wobei die Kartusche (100) gestaltet ist, so dass ein Luftstrom von dem ersten Ende zu dem zweiten Ende der länglichen zylindrischen Kartusche (100) und/oder umgekehrt strömen kann.

13. Biologisch abbaubare Kartusche (100) nach Anspruch 12, wobei die biologisch abbaubaren Materialien Papier, Baumwolle, Naturfasern und/oder recycelte Biomaterialien sind.

14. Biologisch abbaubare Kartusche (100) nach einem der Ansprüche 12 - 13, wobei der Umfang des zweiten Endes etwa 5 % bis 40 %, vorzugsweise etwa 10 % bis 30 %, grösser ist als der Umfang des ersten Endes der länglichen zylindrischen Kartusche (100), nachdem das dritte Element (30) an dem zweiten Ende der länglichen Kartusche (100) vorgesehen ist.

## Revendications

1. Procédé pour la production d'une cartouche biodégradable (100) pour un système à vapeur de tabac, dans lequel la cartouche biodégradable (100) a une forme cylindrique définissant une cavité interne, comprenant les étapes de :
- Fourniture d'un premier élément (10) de forme cylindrique définissant ladite cavité de la cartouche ;
- Fourniture d'un deuxième élément (20a, 20b) à une première extrémité du premier élément (10), de sorte à fermer une première extrémité de la cavité de la cartouche (100) ;
- Fourniture d'un autre deuxième élément (20a, 20b) à une deuxième extrémité du premier élément (100), de sorte à fermer la deuxième extrémité de la cavité de cartouche (100), les deux deuxièmes éléments étant identiques ;
- Fourniture d'un troisième élément (30) autour de l'un des premier ou deuxième éléments (20a, 20b) de sorte que la périphérie de la cartouche soit plus grande à une première extrémité de la cartouche que la périphérie à une deuxième extrémité de la cartouche (100) ;
dans lequel le premier élément (10), le deuxième élément (20a, 20b) et le troisième élément (30) sont fait de matériaux biodégradables,
dans lequel la cartouche (100) est conçue de telle sorte qu'un flux d'air peut s'écouler de la première extrémité à la deuxième extrémité de la cartouche allongée de forme cylindrique (100), et/ou vice versa.

2. Procédé selon la revendication 1, comprenant une autre étape de remplissage de la cavité de la cartouche (100) avec un ou plusieurs matériaux de remplissage, de préférence des granulés contenant du tabac.

3. Procédé selon la revendication 2, dans lequel le remplissage du matériau de remplissage est effectué après que la première extrémité de la cavité de la cartouche (100) est fournie avec le deuxième élément (20a, 20b).

4. Procédé selon l'une des revendications 1 à 3, dans lequel le troisième élément (30) est fourni sous forme d'une feuille à enrouler autour de la deuxième extrémité de la cartouche allongée (100), de préférence la portion enroulée ayant une épaisseur additionnelle d'environ 1 mm à environ 10 mm, de manière plus préférée d'environ 2 mm à 5 mm.

5. Procédé selon l'une des revendications 1 à 3, dans lequel le troisième élément (30) est fourni sous forme d'un capuchon pour envelopper la deuxième extrémité de la cartouche allongée (100).

6. Procédé selon l'une des revendications 1 à 3, dans lequel le deuxième élément (20b) est fourni au troisième élément (30) avant d'être placé vers la cavité de la deuxième extrémité du premier élément (10), dans lequel le troisième élément (30) est fourni sous forme de capuchon pour envelopper la deuxième extrémité de la cartouche allongée (100).

7. Procédé selon la revendication 5 ou 6, dans lequel le capuchon fourni à la deuxième extrémité de la cartouche allongée a une périphérie plus grande que la périphérie de la cartouche cylindrique allongée (100).

8. Procédé selon la revendication 7, dans lequel la périphérie du capuchon est d'environ 5 % à 40 %, de préférence d'environ 10 % à 30 %, supérieure à la périphérie de la première extrémité de la cartouche allongée cylindrique (100).

9. Procédé selon l'une des revendications précédentes, comprenant en outre une étape de scellement et/ou une étape d'assemblage.

10. Procédé selon l'une des revendications précédentes, dans lequel le premier élément est formé en roulant un matériau en feuille, tel qu'une carte ou du papier, autour d'un axe longitudinal.

11. Procédé selon l'une des revendications précédentes, dans lequel le premier élément (10) et l'un des deuxièmes élément (20a, 20b) sont fixés l'un à l'autre en butée avec l'emballage, de préférence un emballage en papier.

12. Cartouche biodégradable (100) pour un système à vapeur de tabac, dans lequel la cartouche (100) a une forme cylindrique principalement allongée ayant une cavité, comprenant une paroi, une première extrémité et une deuxième extrémité, dans laquelle la paroi est faite d'un premier élément (10), dans lequel deux deuxièmes éléments identiques (20a, 20b) sont fournis chacun à chaque extrémité de la cartouche allongée (100), un troisième élément (30) est fourni à la deuxième extrémité de la cartouche allongée (100) de sorte que la périphérie de la deuxième extrémité est plus grande que la périphérie de la première extrémité de la cartouche allongée (100), dans laquelle le premier élément (10), le deuxième élément (20a, 20b) et le troisième élément (30) sont faits de matériaux biodégradables, dans lequel la cartouche (100) est conçue de telle manière qu'un flux d'air peut s'écouler depuis la première extrémité vers la deuxième extrémité de la cartouche allongée de forme cylindrique (100) et/ou vice versa.

13. Cartouche biodégradable (100) selon la revendication 12, dans laquelle les matériaux biodégradables sont du papier, du coton, des fibres naturelles et/ou des biomatériels recyclés.

14. Cartouche biodégradable (100) selon l'une des revendication 12 et 13, dans laquelle la périphérie de la deuxième extrémité est d'environ 5% à 40%, de préférence d'environ 10 % à 30 %, plus grande que la périphérie de la première extrémité de la cartouche allongée cylindrique (100), après que le troisième élément (30) a été fourni à la deuxième extrémité de la cartouche allongée (100).
